Europäisches Patentamt

European Patent Office

Office européen des brevets

(19)

(11) **EP 0 894 521 B1**

(12) **FASCICULE DE BREVET EUROPEEN**

(45) Date de publication et mention
de la délivrance du brevet:
**23.07.2003 Bulletin 2003/30**

(51) Int Cl.⁷: **B01D 53/04**, B01D 53/047

(21) Numéro de dépôt: **98401299.7**

(22) Date de dépôt: **29.05.1998**

(54) **Régulation d'un procédé PSA**

Regelung von einem Druckwechseladsorptionsverfahren

Regulation of a pressure swing adsorption process

(84) Etats contractants désignés:
**DE ES FR IT NL**

(30) Priorité: **25.07.1997 FR 9709513**

(43) Date de publication de la demande:
**03.02.1999 Bulletin 1999/05**

(73) Titulaire: **L'air Liquide, S.A. à Directoire et Conseil
de Surveillance pour l'Etude et l'Exploitation des
Procédés Georges Claude
75321 Paris Cedex 07 (FR)**

(72) Inventeurs:
• **Monereau, Christian
75011 Paris (FR)**

• **Rouge, Dominique
92240 Malakoff (FR)**
• **Derive, Nathalie
75010 Paris (FR)**
• **Montfort, Christophe
78530 Buc (FR)**

(74) Mandataire: **Pittis, Olivier et al
L'Air Liquide, S.A.,
Direction de la Propriété Intellectuelle,
75, Quai d'Orsay
75321 Paris Cedex 07 (FR)**

(56) Documents cités:
EP-A- 0 375 220      EP-A- 0 736 319
EP-A- 0 806 234      GB-A- 2 013 101
US-A- 4 614 525

**Description**

L'invention concerne un procédé de type PSA de séparation d'un flux gazeux contenant essentiellement de l'oxygène et de l'azote, tel l'air, par adsorption préférentielle de l'azote sur un matériau absorbant, telle une zéolite, en vue de produire de l'oxygène ou un flux gazeux enrichi en oxygène, c'est-à-dire appauvri en azote.

L'oxygène est un gaz présentant un grand intérêt industriel car trouvant de multiples applications dans des domaines techniques très variés : fabrication de l'acier, du verre ou du papier, médecine, soudage de métaux, combustion ou dépollution, par exemples.

Une des techniques actuellement utilisées pour produire de l'oxygène est la technique dite "PSA" (pour Pressure Swing Adsorption). Dans le cadre de l'invention on entend par procédés PSA, non seulement les procédés PSA proprement-dits, mais aussi les procédés analogues, tels les procédés VSA (Vacuum Swing Adsorption) ou MPSA (Mixed Pressure Swing Adsorption).

Selon cette technique PSA, l'oxygène contenu dans un mélange gazeux comprenant essentiellement de l'oxygène et de l'azote, tel l'air, est séparé dudit mélange gazeux grâce à une adsorption de l'azote sur un matériau adsorbant préférentiellement l'azote, ladite adsorption de l'azote étant effectuée par variation de la pression appliquée dans la zone de séparation contenant ledit matériau adsorbant; l'oxygène ne s'adsorbant pas ou peu est récupéré en sortie de ladite zone de séparation.

De tels procédés PSA ont déjà été décrits à maintes reprises dans l'art antérieur. De façon schématique, un procédé PSA comprend toujours:

- une étape d'adsorption sélective de l'azote sur un matériau adsorbant, à une pression d'adsorption dite "pression haute";
- une étape de désorption de l'azote piégé par l'adsorbant, à une pression de désorption inférieure à la pression d'adsorption, dite "pression basse";
- une étape de repressurisation de la zone de séparation comprenant l'adsorbant, par passage de la pression basse à la pression haute; et l'oxygène produit étant récupéré durant la phase d'adsorption de l'azote.

De là, on comprend aisément que l'efficacité de séparation du mélange gazeux dépende de nombreux paramètres, tels la pression haute, la pression basse, le type de matériau adsorbant et l'affinité de celui-ci pour les composés à séparer, la composition du mélange gazeux à séparer, la température d'adsorption du mélange à séparer, la taille et la forme des billes d'adsorbant, la composition de ces billes et le gradient de température s'établissant à l'intérieur du lit d'adsorbant, par exemples.

A ce jour, aucune loi de comportement générale n'a cependant pu être déterminée, car il est très difficile de relier ces différents paramètres entre eux.

Ainsi, le document US-A-3,140,933 décrit un procédé PSA mettant en oeuvre une zéolite de type X échangée au lithium, mais n'indique ni la température d'alimentation, ni dans quelles gammes préférentielles de pressions d'adsorption (pression haute) et de désorption (pression basse), il est souhaitable de travailler.

De même, le document EP-A-0667183 décrit un procédé PSA mettant en oeuvre une zéolite de type X échangée par 50 à 95% de cation lithium, 4 à 50% de cations trivalents. Là encore, aucune plage préférentielle de température d'alimentation, de pression d'adsorption et de pression de désorption n'est indiquée.

Il existe, d'autre part, des documents plus ou moins contradictoires ayant trait au paramètre de température.

Ainsi, le document US-A-3,973,931 décrit un procédé PSA, dans lequel les variations de température au sein des lits d'adsorbant sont atténuées par un chauffage dudit lit au moyen d'une source extérieure de chaleur.

A l'inverse, le document US-A-5,169,413 décrit un procédé PSA, dans lequel le lit d'adsorbant est refroidi jusqu'à une température inférieure à la température ambiante au moyen d'un système de réfrigération interne. L'enseignement de ce document est donc en contradiction avec celui du document précédent.

En outre, d'autres documents soulignent la nécessité de procéder à une régulation du procédé PSA au cours du temps.

Ainsi, le document US-A-5,529,607 décrit un procédé PSA comprenant au moins 2 lits d'adsorbant, dans lequel on détermine périodiquement, la différence absolue entre la concentration d'oxygène dans l'azote désorbé par l'un des lits et la concentration d'oxygène dans l'azote désorbé par l'autre lit, et on ajuste périodiquement la durée et l'occurrence de la purge, de manière à réduire ladite différence absolue, la période étant définie par rapport à une durée préfixée ou à une concentration maximale d'oxygène dans l'azote.

Par ailleurs, le document US-A-5,407,465 enseigne un procédé PSA comprenant au moins 2 lits d'adsorbant, lequel est régulé en fonction de la détermination des variations du profil de température au sein des lits d'adsorbant; ce procédé permet d'éliminer les problèmes de purge de durée excessive ou insuffisante.

En outre, le document US-A-5,258,056 propose un procédé PSA dont la régulation est effectuée par détermination d'un signal de référence et comparaison de celui-ci avec une valeur prédéterminée, de sorte d'en déduire un signal de commande de vanne destiné à réguler le flux d'alimentation en gaz entrant dans le système.

Toutefois, aucun de ces documents ne permet de résoudre le problème que posent les variations de la température ambiante sur les performances de l'unité PSA; l'air ambiant étant, dans le cadre de la présente invention, l'air contenu à l'intérieur d'un bâtiment ou d'une enceinte chauffée ou non, ou l'air extérieur, c'est-à-dire dans les conditions atmosphériques, pris tel quel ou éventuellement prétraité.

En effet, il est connu que la température d'aspiration de la machine, c'est-à-dire la température de l'air ambiant aspiré par le compresseur alimentant le ou les adsorbeurs, varie considérablement en fonction de la période de l'année, c'est-à-dire de la saison, du site géographique où est installée l'unité PSA et, plus généralement, du climat régnant sur ce site.

Or, de telles fluctuations de la température d'aspiration sont à l'origine de variations importantes des performances de l'unité PSA au cours de l'année, celles-ci étant plus ou moins dégradées selon la température ambiante.

Une solution pour remédier à ce problème de fluctuation de la température d'aspiration pourrait consister à contrôler la température d'alimentation, c'est-à-dire la température de l'air introduit à l'intérieur des adsorbeurs, en plaçant par exemple un ou des échangeurs thermiques entre la source de compression d'air et les adsorbeurs, afin de réchauffer ou, selon le cas refroidir, l'air d'aspiration déjà réchauffé de par la compression et d'assurer ainsi l'introduction, à l'intérieur des adsorbeurs, d'air à une température d'alimentation régulée.

Le document GB-A-2013101 décrit un générateur d'oxygène pour avions fonctionnant en mode PSA, dans lequel s'effectue un contrôle de température.

Le document US-A-4,614,525 enseigne, par ailleurs, un procédé PSA de production d'oxygène conduisant à une diminution de la consommation d'énergie par utilisation de pompes à vide adaptées, notamment de deux pompes à vide reliées en série et ayant des capacités d'aspiration différentes l'une de l'autre.

Cependant, on a pu observer que le seul contrôle de la température d'alimentation reste insuffisant étant donné que la température d'aspiration de l'air alimentant le compresseur affecte la quantité de matière, c'est-à-dire la quantité de gaz, introduite dans les adsorbeurs et, par conséquent, les pressions s'exerçant dans les adsorbeurs et, par là-même, les performances du procédé PSA dans son ensemble.

En d'autres termes, la quantité d'air aspirée par le compresseur, lorsque la température ambiante est inférieure à O°C, par exemple, n'est pas égale à celle aspirée par le compresseur, lorsque la température ambiante est proche de 30°C, par exemple, toutes choses restant égales par ailleurs.

Le but de la présente invention est donc de résoudre ce problème de variations intempestives des performances du procédé PSA dues aux fluctuations de la température ambiante, en proposant un mode de régulation permettant de maintenir sensiblement équivalentes les performances des procédés PSA, de préférence VSA, et ce, quelle que soit la température de l'air d'aspiration, qui soit de mise en oeuvre aisée à l'échelle industrielle et qui permette de réduire les coûts de production de l'oxygène.

La présente invention concerne alors un procédé PSA de séparation d'un flux gazeux contenant essentiellement de l'oxygène et de l'azote par adsorption préférentielle de l'azote, jusqu'à une pression haute d'adsorption, sur au moins un lit d'un matériau adsorbant inséré dans au moins une zone de séparation, ledit matériau adsorbant préférentiellement l'azote, chaque lit de matériau adsorbant étant soumis à des cycles successifs de séparation, chaque cycle de séparation comprenant au moins:

- une phase d'alimentation comprenant une introduction du flux gazeux à une température d'alimentation (Talim) dans la zone de séparation avec passage de la pression basse de désorption à la pression haute d'adsorption,
- une phase de purge comprenant une désorption de l'azote adsorbé sur ledit matériau adsorbant jusqu'à une pression basse de désorption inférieure à ladite pression haute d'adsorption,

    caractérisé en ce qu'il comporte, en outre, une régulation de la température d'alimentation (Talim) du flux gazeux, tel l'air, à séparer et un ajustage de la pression haute d'adsorption, l'ajustage de la pression haute d'adsorption étant réalisé par introduction, dans ladite phase d'alimentation, d'un temps mort de durée X variable.

Selon le mode de réalisation choisi, le procédé de l'invention peut inclure l'une ou plusieurs des caractéristiques suivantes :

- on maintient la pression haute sensiblement égale à une valeur de pression de consigne préfixée,
- on maintient la température d'alimentation Talim sensiblement égale à une valeur de température de consigne préfixée,
- on choisit un temps mort initial de durée Xo avec :

$$Xo = d \cdot \frac{(Taspmax - 1)}{Taspo}$$

dans laquelle :

- d est la durée d'alimentation de la zone de séparation en flux gazeux à séparer,
- Taspmax est la température d'aspiration maximale (en K) du flux de gaz à laquelle l'unité PSA doit s'adapter sur le site considéré,
- et Taspo est la température d'aspiration moyenne (en K) du flux de gaz sur le site considéré,
- la pression haute d'adsorption est comprise entre $10^5$ Pa et $10^6$ Pa, de préférence, de l'ordre de $1,4.10^5$ Pa,
- la température d'alimentation (Talim) est comprise entre 10°C et 60°C, de préférence entre 25°C et 45°C,
- la température d'aspiration maximale (Taspmax) est comprise entre 288 K et 333 K,
- la température d'aspiration moyenne (Taspo) est comprise entre 273 K et 303 K,
- la durée (d) d'alimentation est inférieure ou égale à 45 secondes,
- le flux gazeux à séparer est de l'air,
- le matériau adsorbant est choisi parmi les zéolites de type X ou A, et, préférentiellement, ladite zéolite comporte au moins 50 % de ses éléments AIO2 associés à des cations choisis dans le groupe formé par les cations calcium, lithium, zinc, cuivre, manganèse, magnésium, nickel ou de tout métal alcalin ou alcalino-terreux,

L'invention concerne, en outre, un dispositif susceptible de mettre en oeuvre un procédé PSA de séparation d'un flux gazeux contenant essentiellement de l'oxygène et de l'azote, tel le procédé sus-décrit, comprenant des moyens de régulation de la température d'alimentation (Talim) et des moyens d'ajustage de la pression haute d'adsorption.

De préférence, le dispositif comprend, en outre, des moyens de commande permettant de réguler la température d'alimentation (Talim) autour d'une valeur de consigne de température préfixée et/ou la durée du temps mort X autour d'une valeur de consigne de durée préfixée.

Préférentiellement, le dispositif de l'invention comprend de 1 à 3 zones de séparation ou adsorbeurs.

La présente invention va maintenant être décrite plus en détail à l'aide d'exemples donnés à titre illustratif, mais nullement limitatif de l'invention.

Exemples

Les résultats consignés dans les exemples suivants ont été simulés (mode adiabatique) à l'aide d'un programme de simulation adéquat.

Le programme utilisé pour la simulation repose sur les principes de conservation de la masse, de conservation de l'enthalpie, de conservation de la quantité de mouvement et utilise le modèle de la Linear Driving Force (voir "Principles of adsorption and adsorption processes", John-Wiley & Sons, 1984; D. M. Ruthven, p. 242-243; ou "Pressure Swing Adsorption", VCS Publishers, 1994, p. 58-61) pour l'évaluation de la cinétique des transferts solide-gaz au sein de la masse d'adsorbant. De tels modèles de simulation sont notamment décrits dans Pressure Swing Adsorption, Ruthven, Farooq et Knaebel, VCH Publishers, 1994, pages 172-209; et dans Fluid Flow Through Packed Columns, S. Ergun, Chem. Engr. Prog., 48(2), 89(1952). La résolution des équations peut, quant à elle, être réalisée par exemple au moyen du programme DIVPAG de la Bibliothèque Mathématique IMSL (International Mathematical & Statistical Library) commercialisé par la société MicrosoftTM; ou du programme ADSIM commercialisé par la société AspentechTM. L'homme du métier est parfaitement en mesure de choisir un programme de simulation adéquat parmi les nombreux programmes disponibles sur le marché et d'y introduire les données précédentes. Si besoin est, il peut également se reporter à l'article de. D. G. Hartzog et S. Sircar; Adsorption, 1, 133-151 (1995), Sensitivity of PSA Process Performance to Input Variables, décrivant un programme similaire.

Dans tous les exemples suivants, le mélange gazeux à séparer contenant essentiellement de l'oxygène et de l'azote est de l'air.

Les performances économiques du procédé PSA de l'invention ont été évaluées de la même manière pour tous les exemples ci-après, c'est-à-dire par simulation et en utilisant les relations suivantes.

L'indice d'énergie spécifique (ES) est donné par la formule suivante (à 20°C, pour un taux d'humidité relative de 70%) :

$$ES = \frac{(1 - \underline{R}.0{,}2096 + 0{,}0166).\int_{cycle} KW(\Delta P).dt}{R.0{,}2096.\int_{cycle} Q(\Delta P).\dfrac{Pasp.273.dt}{1{,}013.Tasp}} . \frac{1}{0.95.0.98}$$

dans laquelle:

- R est le rendement (%);
- t est la teneur en oxygène du gaz produit;
- ΔP est la différence de pression entre la pression d'aspiration (Pasp) et la pression de refoulement (Pref) des machines, c'est-à-dire de la pompe à vide et du compresseur d'air.

Les pertes de charges adoptées pour le calcul sont de 1500 Pa (à Pa) à l'aspiration du compresseur d'air, de 4000 Pa (à $10^5$ Pa) au refoulement du compresseur d'air, de 2000 Pa (à $10^5$ Pa) à l'aspiration de la pompe à vide et de 1500 Pa (à $10^5$ Pa) au refoulement de la pompe à vide;

- Kw est la puissance instantanée à l'arbre et Q est le débit instantané des machines; ces valeurs sont données par les caractéristiques techniques desdites machines;
- le rendement moteur est de 95%;
- le rendement de la transmission est de 98%;
- Tasp est la température de l'air d'aspiration, c'est-à-dire la température de l'air entrant dans la machine.

L'indice d'investissement (I2) est calculé à partir d'un indice d'investissement (I1) de référence et est donné par la formule suivante:

$$I2 = \sum_{i=1}^{12} (C1{,}i).\frac{(Y2{,}i)\,\alpha i}{(Y1{,}i)\,\alpha i}$$

dans laquelle :

. 
$$\sum_{i=1}^{12} (C1{,}i) = I1$$

est l'investissement de référence calculé à partir des différents postes de dépense indiqués dans le Tableau I ci-après.

. Y2,i et Y1,i sont les paramètres de coût indiqués dans le Tableau I.

. αi représente la puissance d'extrapolation, qui rend compte des économies réalisées sur chaque poste de dépense (cf. Tableau I).

TABLEAU I

| POSTE DE DEPENSE | COÛT | $\alpha i$ | Yi |
|---|---|---|---|
| TUYAUTERIE, ARMATURES, ADSORBEUR, SUPPORTS... | C0,1 | $\alpha 1$ | volume des adsorbeurs |
| ADSORBANT | C0,2 | $\alpha 2$ | productivité prix du tamis |
| VANNES | C0,3 | $\alpha 3$ | rendement |
| POMPE A VIDE | C0,4 | $\alpha 4$ | débit pompe à vide |
| COMPRESSEUR D'AIR EN ENTREE DU PSA | C0,5 | $\alpha 5$ | débit compresseur |
| COMPRESSEUR D'OXYGENE EN SORTIE DU PSA | C0,6 | $\alpha 6$ | - |
| REGULATION, CONTROLE, AUTOMATE | C0,7 | $\alpha 7$ | - |
| INGENIERIE | C0,8 | $\alpha 8$ | - |
| TRANSPORT | C0,9 | $\alpha 9$ | volume des adsorbeurs |
| INSTALLATION ET MISE EN ROUTE | C0,10 | $\alpha 10$ | volume des adsorbeurs |
| FRAIS GENERAUX | C0,11 | $\alpha 11$ | - |
| DIVERS | C0,12 | $\alpha 12$ | - |

L'indice du coût de l'oxygène (Co2) est évalué au moyen de la formule suivante:

$$Co2 = \frac{ES \times Pe + CC \times I}{Pan}$$

où

- ES est l'indice d'énergie spécifique;
- I est l'indice d'investissement;
- Pe est le prix moyen de l'énergie (électricité...);
- CC est un paramètre de coût incluant l'amortissement de l'installation et de la maintenance;
- Pan est la production annuelle d'oxygène produit.

Dans les exemples suivants, l'étude des performances du procédé PSA a été effectuée pour un cycle donné et à machines constantes.

Le cycle mis en oeuvre a une durée totale de 2 x 37 secondes (2 adsorbeurs fonctionnant en parallèle) et peut être schématisé de la façon suivante:

- une phase de production proprement-dite jusqu'à une pression haute de l'ordre de 1,4.10$^5$ Pa, c'est-à-dire d'adsorption de l'azote et de récupération de l'oxygène, se poursuivant pendant 5-(X/2) secondes;
- une phase de production et élution pendant 10 sec;
- une phase d'équilibrage bas à co-courant pendant 7 sec;
- une phase de purge jusqu'à une pression basse, de l'ordre de 0,4.10$^5$ Pa, c'est-à-dire, de désorption de l'azote emprisonné par le lit d'adsorbant et d'évacuation dudit azote, laquelle purge a lieu pendant 20 sec;
- une phase d'élution pendant 10 sec;
- une phase d'équilibrage haut à contre-courant pendant 7 sec;
- un temps mort d'une durée X (en sec) variable (avec $0 \leq X < 10$ sec);
- une phase de recompresssion, c'est-à-dire de passage de la pression basse à la pression haute en vue d'un nouveau cycle de séparation, se poursuivant pendant 15-(X/2) secondes.

Les phases d'équilibrage correspondent à une mise en communication des 2 adsorbeurs (bouteilles), l'un avec l'autre, alors qu'il y règne des pressions différentes.

Les différentes simulations ont été réalisées à machines constantes, c'est-à-dire que les machines volumétriques (pompe à air...) ont été choisies de sorte de fournir des pressions haute et basse, respectivement, de 1,4. 10$^5$ Pa et de 0,4.10$^5$ Pa, en conditions standard, à savoir pour une température d'aspiration de l'air de 20°C (Tasp) et une température de l'air d'alimentation des adsorbeurs de 35°C (Talim). La température d'aspiration de 20°C (Tasp) correspond, en fait, à la température moyenne d'une région tempérée telle l'Europe.

Ainsi, on peut évaluer avec précision le fonctionnement en conditions réelles d'une unité PSA donnée en fonction des conditions propres du site de son installation.

Les matériaux adsorbants utilisés dans les exemples ci-après sont, selon le cas, soit :

- une zéolite de type X comportant environ 86% de ces éléments AlO2 associés à des cations lithium (ci-après : LiX), ou
- une zéolite de type A comportant environ 80 % de ces éléments AlO2 associés à des cations calcium (ci-après : CaA).

Ces matériaux adsorbants sont insérés sous forme d'un lit unique au sein des 2 adsorbeurs travaillant en parallèle, c'est-à-dire que lorsque l'un de ces adsorbeurs est en phase de production, l'autre est en phase de purge ou de recompression. De telles zéolites sont couramment accessibles dans le commerce.

Afin d'étudier les variations des performances de ce procédé PSA (plus précisément VSA), avec chacun de ces 2 matériaux adsorbants, en fonction de la température de l'air d'aspiration Tasp, c'est-à-dire la température de l'air ambiant alimentant le compresseur d'air, on fait varier la température d'aspiration dans la plage -10°C à 35°C dans différents cas de régulation :

- cas n°1 : régulation de la pression haute du cycle à $1,4.10^5$ Pa par introduction d'un temps mort (X>0) et régulation de la température d'alimentation de l'adsorbeur à 35 °C;
- cas n°2 : régulation de la pression haute du cycle en permanence à $1,4.10^5$ Pa par introduction d'un temps mort (X>0), mais pas de régulation de la température d'alimentation (Talim) de l'adsorbeur (pas d'échangeur thermique);
- cas n°3 : régulation de la température d'alimentation (Talim) de l'adsorbeur à 35°C (présence d'un échangeur thermique inséré entre le compresseur et l'adsorbeur), mais pas de régulation de la pression haute du cycle car absence de temps mort (X=0);
- cas n°4 : aucune régulation de l'unité VSA.

Lorsqu'on ne régule pas la température d'alimentation (Talim) de l'air comprimé introduit dans les adsorbeurs, celle-ci s'établit à une valeur égale à la température d'aspiration (Tasp) de l'air ambiant aspiré par la machine d'alimentation augmentée de l'élévation de température engendrée par le passage dudit air à travers ladite machine d'alimentation (compresseur par exemple).

De même, lorsqu'on ne régule pas la pression haute du cycle, celle-ci s'établit à une valeur résultant de l'équilibre entre la quantité de matière (air) introduite dans l'adsorbeur et la quantité de matière (en particulier d'azote) adsorbée par le tamis moléculaire.

La régulation de la pression haute du cycle à $1,4.10^5$ Pa par introduction d'un temps mort se traduit, selon le cas, par une hausse ou une baisse, au cours du temps de la durée X dudit temps mort, lequel est nécessairement supérieur ou égal à O (X≥O). Dans nos exemples, la régulation de pression haute prend la forme suivante :

$$Xo = A$$

$$Xn+1 = Xn.(1+a.((Phn / Phc) - 1))$$

avec :

- Xn : temps mort au cycle n;
- Xn+1 : temps mort au cycle n+1;
- A : valeur du temps mort initial Xo;
- Phn : pression haute au cycle n;
- PhC : pression haute de consigne;
- a : gain de la régulation.

Les tableaux II à V ci-après permettent de visualiser l'évolution des performances d'une unité PSA en fonction de la température (Tasp) d'aspiration et du type de régulation opéré : pression haute et/ou température d'alimentation (Talim) (cas 1 à 4); les résultats étant donnés en indices par rapport à une température d'aspiration de 20°C.

Exemple 1

Cet exemple a été réalisé avec des températures d'aspiration de -10, 0, +20 et +35°C, et avec ou sans régulation de la pression haute du cycle PSA et/ou de la température d'alimentation de l'adsorbeur. La valeur de Xo est fixée ici à 1.5 sec.

Les résultats obtenus et consignés dans les tableaux II à V sont donnés en indices, c'est-à-dire qu'ils illustrent les fluctuations du procédé PSA à type de régulation donnée (cas n°1 à 4).

TABLEAU II

| Tasp = -10 °C | cas n°1 | cas n°2 | cas n°3 | cas n°4 |
|---|---|---|---|---|
| Régulation pression haute à $1,4.10^5$ Pa (avec Xo = 1,5 sec) | oui | oui | non | non |
| Régulation Talim= 35°C | oui | non | oui | non |
| Indice de débit de production | 99 | / | 108 | / |
| Indice d'énergie spécifique (Es) | 101 | / | 106 | / |
| Indice de pression haute | 101 | / | 123 | / |
| Indice de pression basse | 102 | / | 111 | / |
| / : non déterminé | | | | |

TABLEAU III

| Tasp = 0°C | cas n°1 | cas n°2 | cas n°3 | cas n°4 |
|---|---|---|---|---|
| Régulation pression haute à $1,4.10^5$ Pa (avec Xo = 1,5 sec) | oui | oui | non | non |
| Régulation Talim= 35°C | oui | non | oui | non |
| Indice de débit de production | 100 | 97 | 104 | 94 |
| Indice d'énergie spécifique (Es) | 100 | 97 | 104 | 98 |
| Indice de pression haute | 100 | 99 | 115 | 95 |
| Indice de pression basse | 101 | 103 | 107 | 104 |

TABLEAU IV

| Tasp = 20°C | cas n°1 | cas n°2 | cas n°3 | cas n°4 |
|---|---|---|---|---|
| Régulation pression haute à $1,4.10^5$ Pa (avec Xo = 1,5 sec) | oui | oui | non | non |
| Régulation Talim= 35°C | oui | non | oui | non |
| Indice de débit de production | 100 | 100 | 100 | 100 |
| Indice d'énergie spécifique (Es) | 100 | 100 | 100 | 100 |
| Indice de pression haute | 100 | 100 | 100 | 100 |
| Indice de pression basse | 100 | 100 | 100 | 100 |

TABLEAU V

| Tasp = 35°C | cas n°1 | cas n°2 | cas n°3 | cas n°4 |
|---|---|---|---|---|
| Régulation pression haute à $1,4.10^5$ Pa (avec Xo = 1,5 sec) | oui | oui | non | non |
| Régulation Talim= 35°C | oui | non | oui | non |
| Indice de débit de production | 101 | 96 | 96 | 99 |
| Indice d'énergie spécifique (Es) | 101 | 109 | 99 | 107 |

TABLEAU V   (suite)

| Tasp = 35°C | cas n°1 | cas n°2 | cas n°3 | cas n°4 |
|---|---|---|---|---|
| Indice de pression haute | 100 | 101 | 92 | 107 |
| Indice de pression basse | 99 | 92 | 95 | 96 |

Il ressort clairement des tableaux II à V qu'une régulation effectuée uniquement sur la température d'alimentation (Talim) des adsorbeurs ou uniquement sur la pression haute ne suffit pas à compenser les fluctuations importantes de performances de l'unité PSA, à savoir d'indices de débit de production et d'énergie spécifique (Es), dues aux variations de la température d'aspiration : -10°C à +35°C susceptibles d'être rencontrées sur un site de production durant une année complète.

A l'inverse, une double régulation, portant à la fois sur la température d'alimentation (Talim) des adsorbeurs et sur la pression haute mise en oeuvre, s'avère parfaitement efficace et permet de maintenir sensiblement constantes les performances de l'unité PSA, quelle que soit la température d'aspiration, c'est-à-dire la température de l'air ambiant.

Cependant, il faut souligner que les performances obtenues de par cette double régulation sont tout-à-fait surprenantes et inattendues, étant donné qu'elles vont au-delà d'une addition des deux régulations prises indépendamment l'une de l'autre.

En effet, il se produit en l'absence de toute régulation, comme le laisse apparaître le cas n°4, une hausse de la pression haute du cycle lorsque la température d'aspiration augmente. Partant de cette constatation et pour pallier cette augmentation inopinée de la pression haute, l'homme du métier serait enclin à augmenter la durée du temps mort (X) lorsque la température d'alimentation (Talim) augmente.

Or, la mise en oeuvre de la double régulation susmentionnée aboutit à une solution exactement opposée, à savoir une diminution de la durée du temps mort (X) lorsque la température d'alimentation augmente. En effet, la régulation de la température d'alimentation joue sur la quantité de matière, en particulier la quantité d'azote, adsorbée et, de là, affecte, au même titre que la durée du temps mort X, l'équilibre entre la phase gazeuse et la phase adsorbée et donc aussi la pression haute d'adsorption en fin de phase de production.

Il en résulte, de manière surprenante, que la combinaison des deux régulations, à savoir température d'alimentation et pression haute, permet d'assurer l'équilibre du procédé PSA, quelle que soit la température d'aspiration, de sorte d'obtenir un débit et une énergie spécifique sensiblement constants.

Exemple 2

Cet exemple vise à déterminer une valeur optimale de temps mort Xo, valeur initiale du temps mort, c'est-à-dire dans les conditions standard définis par Tasp=Taspo. Cette valeur doit convenir à une régulation d'un procédé PSA dans des conditions réelles, c'est-à-dire quelle que soit la température d'aspiration et/ou la température ambiante pendant la plus grande partie de l'année.

De là et afin de pouvoir maintenir les performances du procédé PSA sensiblement constantes au cours du temps, c'est-à-dire même pour des températures d'aspiration élevées (en été) ou basses (en hiver), il peut être nécessaire, au vu des résultats de l'exemple 1, de réaliser un surdimensionnement des machines d'alimentation (compresseurs...), c'est-à-dire d'assurer la présence d'un temps mort Xo de durée non nulle dans les conditions standard (Tasp=Taspo). En effet, dès que Tasp>Taspo, le temps mort X partant de Xo aura tendance à diminuer, ainsi que montré dans l'exemple 1.

En d'autres termes, il importe de réaliser un compromis économique entre, d'une part, le prix de l'unité PSA dans les conditions standard (notamment le coût de l'oxygène produit) et, d'autre part, la flexibilité et les performances de ladite unité en environnement mouvant, c'est-à-dire avec une température d'aspiration variant au cours du temps.

Les tableaux VI et VII montrent clairement l'influence de la durée du temps mort Xo en conditions standard sur le coût de l'oxygène produit et les performances de l'unité PSA mettant en oeuvre une double régulation : pression haute et température d'alimentation.

Le tableau VI expose les résultats obtenus pour une valeur de Xo de 1.5 sec en conditions standard (20°C) et le tableau VII expose ceux obtenus pour une valeur de Xo de 0 sec en conditions standard (avec Taspo=20°C).

TABLEAU VI

| Tasp (en °C) | -10 | 20 | 35 |
|---|---|---|---|
| Durée du temps mort X (en sec) | 4 | 1.5 | 0.1 |
| Régulation Talim (en °C) | 35 | 35 | 35 |

TABLEAU VI   (suite)

| Tasp (en °C) | -10 | 20 | 35 |
|---|---|---|---|
| Indice de débit de production | 99 | 100 | 101 |
| Indice d'énergie spécifique (Es) | 101 | 100 | 101 |
| Indice de coût de O2 produit | 101 | 100 | 101 |

TABLEAU VII

| Tasp (en °C) | -10 | 20 | 35 |
|---|---|---|---|
| Durée du temps mort X (en sec) | 2.2 | 0 | 0 |
| Régulation Talim (en °C) | 35 | 35 | 35 |
| Indice de débit de production | 100 | 100 | 93 |
| Indice d'énergie spécifique (Es) | 101 | 100 | 111 |
| Indice de coût de O2 produit | 98 | 98 | 106 |

Il apparaît que choisir une valeur de Xo nulle, en conditions standard (Tasp = Taspo), conduit à des performances et donc à un coût de l'oxygène constant pour les températures d'aspiration inférieures ou égales à Taspo. Cependant, il n'en va pas de même pour les températures supérieures à Taspo, pour lesquelles les performances et donc le coût de l'oxygène sont nettement dégradés.

Une observation analogue peut être faite pour une valeur de Xo de 1.5 sec, mais pour des températures d'aspiration plus élevées, c'est-à-dire nettement supérieures à Taspo (ici 35°C environ).

Il s'en suit que, selon le site de mise en oeuvre de l'unité PSA, il est nécessaire de trouver un compromis entre le coût de l'unité et la température d'aspiration maximale (Taspmax) à laquelle l'unité PSA doit s'adapter sur ledit site de production, de sorte de déterminer un Xo initial optimal pour le site de production 'où est installée l'unité PSA. Plus précisément, le temps mort Xo initial est un temps mort fixé au moment du dimensionnement de l'unité PSA, en considérant une température d'aspiration (Tasp) égale à la température d'aspiration moyenne sur le site où est installée l'unité PSA.

En effet, la présence d'un temps mort Xo non nul dans les conditions standard implique un surdimensionnement de l'unité PSA dans ces conditions. En revanche, seule la présence d'un temps mort Xo non nul permet d'assurer une adaptation de l'unité PSA (performances maintenues) pour une température d'alimentation supérieure à la température d'alimentation standard.

La détermination de Xo peut être réalisée en appliquant la formule suivante :

$$Xo = d . \frac{(Taspmax - 1)}{Taspo}$$

dans laquelle :

-    Xo est la durée du temps mort de l'unité PSA dans les conditions standard (en sec);
-    d est la durée (en sec) d'alimentation d'un adsorbeur;
-    Taspmax est la température d'aspiration (en K) maximale à laquelle peut être soumise, au cours d'une année, l'unité PSA sur le site sans dégradation des performances de l'unité PSA. Par exemple, Taspmax peut être choisie telle que la probabilité sur une année que la température d'aspiration Tasp soit inférieure à Taspmax soit supérieure à 80%;
-    et Taspo est la température d'aspiration (en K) moyenne sur le site au cours de l'année.

En opérant une double régulation du procédé PSA simultanément sur la pression haute du cycle et sur la température d'alimentation du ou des adsorbeurs, par introduction d'un temps mort de durée Xo, en conditions standard, conforme à la formule précédente, il est possible de maintenir les performances de l'unité PSA pour une large plage de températures d'aspiration (Tasp), correspondant à au moins 80% de l'année, dans le cas présent.

En outre, il faut remarquer que les résultats obtenus en mettant en oeuvre une zéolite de type LiX sont en tous points équivalents à ceux obtenus au moyen d'une zéolite de type CaA.

**Revendications**

1. Procédé PSA de séparation d'un flux gazeux contenant essentiellement de l'oxygène et de l'azote par adsorption préférentielle de l'azote, jusqu'à une pression haute d'adsorption, sur au moins un lit d'un matériau adsorbant inséré dans au moins une zone de séparation, ledit matériau adsorbant préférentiellement l'azote, chaque lit de matériau adsorbant étant soumis à des cycles successifs de séparation, chaque cycle de séparation comprenant au moins:

   - une phase d'alimentation comprenant une introduction du flux gazeux à une température d'alimentation (Talim) dans la zone de séparation avec passage de la pression basse de désorption à la pression haute d'adsorption,
   - une phase de purge comprenant une désorption de l'azote adsorbé sur ledit matériau adsorbant jusqu'à une pression basse de désorption inférieure ladite pression haute d'adsorption,

   **caractérisé en ce qu'**il comporte, en outre, une régulation de la température d'alimentation. (Talim) du flux gazeux à séparer et un ajustage de la pression haute d'adsorption, l'ajustage de la pression haute d'adsorption étant réalisé par introduction, dans ladite phase d'alimentation, d'un temps mort de durée X variable.

2. Procédé selon la revendication 1 , **caractérisé en ce qu'**on maintient la pression haute sensiblement égale à une valeur de pression de consigne préfixée.

3. Procédé selon l'une des revendications 1 ou 2, **caractérisé en ce qu'**on maintient la température d'alimentation Talim sensiblement égale à une valeur de température de consigne préfixée.

4. Procédé selon l'une des revendications 1 à 3, **caractérisé en ce qu'**on choisit un temps mort initial de durée Xo avec :

$$Xo = d \cdot \frac{(Taspmax - 1)}{Taspo}$$

   dans laquelle :

   - d est la durée d'alimentation de la zone de séparation en flux gazeux à séparer,
   - Taspmax est la température d'aspiration maximale (en K) du flux de gaz à laquelle l'unité PSA doit s'adapter sur le site considéré,
   - et Taspo est la température d'aspiration moyenne (en K) du flux de gaz sur le site considéré.

5. Procédé selon l'une des revendications 1 à 4, **caractérisé en ce que** la pression haute d'adsorption est comprise entre $10^5$ Pa et $10^6$ Pa.

6. Procédé selon l'une des revendications 1 à 5, **caractérisé en ce que** la température d'alimentation (Talim) est comprise entre 10°C et 60°C, de préférence entre 25°C et 45°C.

7. Procédé selon l'une des revendications 1 à 6, **caractérisé en ce que** la température d'aspiration maximale (Taspmax) est comprise entre 288 K et 333 K.

8. Procédé selon l'une des revendications 1 à 7, **caractérisé en ce que** la température d'aspiration moyenne (Taspo) est comprise entré 273 K et 303 K.

9. Procédé selon l'une des revendications 1 à 8, **caractérisé en ce que** la durée (d) d'alimentation est inférieure ou égale à 45 secondes.

10. Procédé selon l'une des revendications 1 à 9, **caractérisé en ce que** le flux gazeux à séparer est de l'air.

**Patentansprüche**

1. Druckwechseladsorptionsverfahren zur Trennung eines Gasstroms, der im wesentlichen Sauerstoff und Stickstoff enthält, durch bevorzugte Adsorption von Stickstoff bis zu einem hohen Adsorptionsdruck an mindestens einer Schüttung eines Adsorptionsmittels in mindestens einer Trennzone, wobei das Adsorptionsmittel vorzugsweise Stickstoff adsorbiert und jede Adsorptionsmittelschüttung aufeinanderfolgenden Trennzyklen unterworfen wird, wobei jeder Trennzyklus mindestens:

- eine Einspeisungsphase, in der man den Gasstrom bei einer Einspeisungstemperatur (TEinsp) mit Übergang vom niedrigen Desorptionsdruck zum hohen Adsorptionsdruck in die Trennzone einleitet,
- eine Spülphase, in der man den an dem Adsorptionsmittel adsorbierten Stickstoff bis zu einem unter dem hohen Adsorptionsdruck liegenden niedrigen Desorptionsdruck desorbiert,

aufweist, **dadurch gekennzeichnet, daß** man dabei außerdem auch noch die Einspeisungstemperatur (TEinsp) des zu trennenden Gasstroms reguliert und den hohen Adsorptionsdruck einstellt, wobei die Einstellung des hohen Adsorptionsdrucks dadurch erfolgt, daß man in die Einspeisungsphase eine Totzeit variabler Länge X einführt.

2. Verfahren nach Anspruch 1, **dadurch gekennzeichnet, daß** man den hohen Druck weitgehend bei einem vorher festgelegten Drucksollwert hält.

3. Verfahren nach Anspruch 1 oder 2, **dadurch gekennzeichnet, daß** man die Einspeisungstemperatur (TEinsp) weitgehend bei einem vorher festgelegten Temperatursollwert hält.

4. Verfahren nach einem der Ansprüche 1 bis 3, **dadurch gekennzeichnet, daß** man eine Anfangstotzeit der Länge Xo wählt, wobei:

$$Xo = d \, \frac{(TEinzugmax) - 1)}{TEinzugo}$$

worin:

- d für die Dauer der Einspeisung des zu trennenden Gasstroms in die Trennzone steht,
- TEinzugmax für die maximale Einzugstemperatur (in K) des Gasstroms, auf die die PSA-Einheit an dem betrachteten Standort ausgelegt ist, steht,
- TEinzugo für die mittlere Einzugstemperatur (in K) des Gasstroms an dem betrachteten Standort steht.

5. Verfahren nach einem der Ansprüche 1 bis 4, **dadurch gekennzeichnet, daß** der hohe Adsorptionsdruck zwischen $10^5$ Pa und $10^6$ Pa liegt.

6. Verfahren nach einem der Ansprüche 1 bis 5, **dadurch gekennzeichnet, daß** die Einspeisungstemperatur (TEinsp) zwischen 10°C und 60°C und vorzugsweise zwischen 25°C und 45°C liegt.

7. Verfahren nach einem der Ansprüche 1 bis 6, **dadurch gekennzeichnet, daß** die maximale Einzugstemperatur (TEinzugmax) zwischen 288 K und 333 K liegt.

8. Verfahren nach einem der Ansprüche 1 bis 7, **dadurch gekennzeichnet, daß** die mittlere Einzugstemperatur (TEinzugo) zwischen 273 K und 303 K liegt.

9. Verfahren nach einem der Ansprüche 1 bis 8, **dadurch gekennzeichnet, daß** die Einspeisungsdauer (d) kleiner gleich 45 Sekunden ist.

10. Verfahren nach einem der Ansprüche 1 bis 9, **dadurch gekennzeichnet, daß** es sich bei dem zu trennenden Gasstrom um Luft handelt.

**Claims**

1. PSA process for the separation of a gas stream containing essentially oxygen and nitrogen by preferential adsorption of the nitrogen, at a high adsorption pressure, on at least one bed of an adsorbent material inserted in at least one separation zone, said material preferentially adsorbing nitrogen, each bed of adsorbent material being subjected to successive separation cycles, each separation cycle comprising at least:

- a feed phase comprising an introduction of the gas stream at a feed temperature ($T_{feed}$) into the separation zone with passage from a low desorption pressure to the high adsorption pressure,
- a purge phase comprising a desorption of the nitrogen adsorbed on said adsorbent material at a low desorption pressure which is below said high adsorption pressure,

**characterized in that** it additionally comprises regulating the feed temperature ($T_{feed}$) of the gas stream to be separated and adjusting the high adsorption pressure, the adjustment of the high adsorption pressure being carried out by introducing, into said feed phase, a dead time of a variable duration X.

2.  Process according to Claim 1, **characterized in that** the high pressure is maintained substantially equal to a predetermined reference pressure value.

3.  Process according to either of Claims 1 and 2, **characterized in that** the feed temperature $T_{feed}$ is maintained substantially equal to a predetermined reference temperature value.

4.  Process according to one of Claims 1 to 3, **characterized in that** an initial dead time of duration $X_o$ is chosen where

$$X_O = d\left(\frac{T_{indmax}}{T_{indo}} - 1\right)$$

in which:

- d is the duration of feed of the separation zone with the gas stream to be separated;
- $T_{indmax}$ is the maximum induction temperature (in K) of the gas stream to which the PSA unit must adapt on the site in question; and
- $T_{indo}$ is the average induction temperature (in K) of the gas stream on the site in question.

5.  Process according to one of Claims 1 to 4, **characterized in that** the high adsorption pressure is between $10^5$ Pa and $10^6$ Pa.

6.  Process according to one of Claims 1 to 5, **characterized in that** the feed temperature ($T_{feed}$) is between $10°C$ and $60°C$, preferably between $25°C$ and $45°C$.

7.  Process according to one of Claims 1 to 6, **characterized in that** the maximum induction temperature ($T_{indmax}$) is between 288 K and 333 K.

8.  Process according to one of Claims 1 to 7, **characterized in that** the average induction temperature ($T_{indo}$) is between 273 K and 303 K.

9.  Process according to one of Claims 1 to 8, **characterized in that** the feed duration (d) is less than or equal to 45 seconds.

10. Process according to one of Claims 1 to 9, **characterized in that** the gas stream to be separated is air.